# FASCICULE DE BREVET EUROPEEN

(11) **EP 3 529 156 B1**
(45) Date de publication et mention de la délivrance du brevet: **16.02.2022**
(21) Numéro de dépôt: 17783874.5
(22) Date de dépôt: 17.10.2017
(51) Int. Cl.: B64D 47/04, F21S 41/143, F21S 41/153, F21S 41/265, F21S 41/663, F21W 107/30

(54) **PROJECTEUR DE PISTE MULTIFONCTIONS À COMMUTATION DE FONCTIONS STATIQUE POUR AÉRONEF**
MULTIFUNKTIONELLES FLUGZEUGLANDELICHT MIT STATISCHER FUNKTIONSUMSCHALTUNG
MULTIFUNCTIONAL AIRCRAFT LANDING LIGHT WITH STATIC FUNCTION SWITCHING

(30) Priorité: 19.10.2016 FR 1660144
(43) Date de publication de la demande: 28.08.2019
(73) Titulaire: Safran Electronics & Defense Cockpit Solutions, 93100 Montreuil (FR)
(72) Inventeur: MILLET, Philippe, 92370 Chaville (FR); DOULE, Claude, 75019 Paris (FR); TSAO, Christian, 93110 Rosny Sous Bois (FR)
(74) Mandataire: Casalonga
(86) Numéro de dépôt international: PCT/EP2017/076392
(87) Numéro de publication internationale: WO 2018/073196

(56) Documents cités:
- EP-A1- 2 995 501
- EP-A2- 1 403 135
- DE-A1-102012 002 458
- FR-A1- 2 889 869
- FR-A1- 3 013 331
- FR-A1- 3 025 285
- US-A1- 2013 094 210
- US-A1- 2016 238 208

## Description

La présente invention concerne un projecteur pour aéronef capable d'assurer plusieurs fonctions d'éclairage.

Les aéronefs de grande taille sont équipés de projecteurs d'atterrissage, souvent situés dans les ailes, et de projecteurs de décollage, souvent fixés sur la jambe de train avant, qui sont utilisés successivement ou simultanément afin de permettre au pilote d'identifier l'espace dans lequel il doit évoluer de nuit. Ils sont également équipés d'un ou plusieurs projecteurs de roulage dits "Taxi" permettant l'éclairage à moyenne distance lorsque l'avion roule sur la piste.

Les projecteurs d'atterrissage et de décollage sont extrêmement puissants afin d'assurer une portée suffisante, de l'ordre de 200 à 500 mètres. Ils sont capables de délivrer plusieurs centaines de milliers de candelas. Les faisceaux produits par les projecteurs de roulage sont approximativement 10 fois moins intenses mais produisent un faisceau beaucoup plus étalé.

Les faisceaux lumineux produits par les projecteurs d'atterrissage et de décollage sont identiques mais ont une orientation différente. Les projecteurs de roulage ont pour leur part sensiblement la même orientation que les projecteurs de décollage mais avec une ouverture angulaire horizontale plus grande.

En effet, en phase d'approche, avant l'atterrissage, l'axe du faisceau des projecteurs d'atterrissage est pointé vers le bas vers la piste avec un angle incliné par rapport à l'axe du fuselage de l'avion. Suivant les différents types d'avions avions cet angle est différent et peut varier de 6 à 13 degrés.

Lors de la phase de décollage, et plus précisément lorsque toutes les roues de l'avion sont au contact du sol, les projecteurs de décollage et de roulage pointent au plus loin vers l'avant de l'avion de sorte que le faisceau lumineux est sensiblement parallèle au sol et à l'axe de fuselage de l'avion.

Ainsi, l'axe d'un faisceau d'atterrissage est dirigé vers le bas, par exemple selon un angle compris entre -13 degrés et -6 degrés par rapport à l'axe du fuselage de l'aéronef, tandis que l'axe d'un faisceau de décollage ou l'axe d'un projecteur de roulage pointe également vers le bas mais selon un angle moindre, par exemple compris entre -3 degrés et -0,5 degrés par rapport à l'axe du fuselage.

Dans l'état de la technique, ces différentes fonctions d'éclairage de l'avion sont assurées par des projecteurs distincts qui sont capables d'émettre les faisceaux lumineux dont la distribution d'intensité et le pointage sont donc adaptés aux besoins en visibilité des pilotes.

Ainsi, les projecteurs d'atterrissage, de décollage et de roulage comprennent des blocs d'éclairage distincts, ce qui contribue à augmenter la masse totale du système d'éclairage embarqué à bord d'un aéronef. Or, comme on le sait, dans le domaine de l'aéronautique, la masse constitue un paramètre critique.

Par ailleurs, la consommation électrique, l'encombrement et le nombre d'emplacements nécessaires pour assurer un éclairement suffisant au regard des performances demandées, créent une contrainte d'implantation et d'alimentation électrique notable.

Le document EP 2 995 501 A1 décrit une unité lumineuse dynamique d'aéronef comprenant un groupe DEL ayant une pluralité de DEL, et un système optique comprenant au moins un élément optique, le système optique étant associé au groupe DEL pour façonner une distribution d'intensité de la lumière émise par le groupe DEL, dans lequel le groupe DEL et le système optique sont fixes à l'intérieur de l'unité, chaque DEL du groupe DEL ayant une position définie par rapport au système optique, une sortie lumineuse de chaque DEL étant affectée différemment par le système optique, dans lequel chaque DEL du groupe de DEL est contrôlable individuellement, et dans lequel l'unité est configuré pour fonctionner dans une pluralité de modes de fonctionnement, un sous-ensemble sélectionné respectif de la pluralité de DEL étant allumé dans chacun de la pluralité de modes de fonctionnement, une distribution d'intensité lumineuse de sortie différente étant émise par l'unité dans chacun de la pluralité des modes de fonctionnement.

Le document US 2016/0238208 A1 propose un dispositif de lampe de véhicule à distance de lumière réglable comprenant deux premières unités de lentilles, une deuxième unité de lentilles, deux premiers groupes électroluminescents et un deuxième groupe électroluminescent. Les deux premiers groupes électroluminescents sont agencés en correspondance avec les deux premières unités de lentilles, chaque premier groupe électroluminescent peut comprendre une première unité électroluminescente, une deuxième unité électroluminescente et une troisième unité électroluminescente. Le second groupe électroluminescent est agencé en correspondance avec la seconde unité de lentille et comprend une première unité électroluminescente et une seconde unité électroluminescente.

Le but de l'invention est donc de pallier ces inconvénients et de proposer un projecteur à plusieurs fonctions d'éclairage pour aéronef. Il peut par exemple s'agir de proposer des fonctions de projecteurs de décollage, d'atterrissage et de roulage.

L'invention, définie selon la revendication indépendante 1 annexée, a donc pour objet un projecteur de piste à commutation de fonctions statique pour aéronef, destiné à produire au moins deux faisceaux ayant des caractéristiques différentes, notamment des orientations et/ou des ouvertures différentes, comprenant un réseau de modules d'éclairage à diodes électroluminescentes comprenant chacun au moins deux ensembles d'au moins une source lumineuse actionnable sélectivement et de manière statique pour assurer au moins l'une des fonctions d'éclairage.

Ce projecteur comporte une lentille convergente commune pour les sources lumineuses, la lentille convergente comprenant un dioptre d'entrée de lumière et un dioptre de sortie de lumière, lesdites sources lumineuses étant positionnées par rapport au dioptre d'entrée de lumière. Ce principe optique se distingue des solutions optiques généralement utilisées pour ce type de projecteur à savoir des collimateurs à réflexion totale ou des miroirs paraboliques.

La lentille convergente possède un dioptre d'entrée à profil globalement plan et un dioptre de sortie ayant un profil elliptique ou asphérique.

Le dioptre d'entrée comporte une surface dioptrique centrale en forme de disque, une surface dioptrique extérieure annulaire et une surface médiane torique tronconique placée entre les surfaces centrale et extérieure.

Dans un mode de mise en œuvre, le plan focal de la lentille convergente est situé à une distance du dioptre d'entrée inférieur à 10mm.

On utilisera préférentiellement des diodes électroluminescentes (DEL) dépourvues de lentilles car le couplage avec la lentille convergente s'en trouve simplifié et donne de meilleures performances.

Dans un mode de réalisation, les sources lumineuses sont désaxées par rapport par rapport à un axe de la lentille de façon à générer soit des faisceaux d'orientation différente soit des faisceaux d'ouverture différente, soit des faisceaux d'orientation et d'ouverture différente, les sources lumineuses étant désaxées par rapport à l'axe de la lentille de manière que les faisceaux divergent mutuellement de 5 à 30 degrés.

Selon une autre caractéristique du projecteur selon l'invention, les sources lumineuses sont défocalisées par rapport à la lentille en étant rapprochées par rapport au dioptre d'entrée.

On peut prévoir que les sources lumineuses sont montées sur une carte de circuit imprimé et la lentille comporte des pieds de fixation et de positionnement de la lentille sur la carte.

Selon encore une autre caractéristique du projecteur selon l'invention, celui-ci comprend un dispositif optique comprenant un ensemble de lentilles convergentes regroupées associées chacune à au moins deux ensembles d'au moins une source lumineuse.

L'invention a également pour objet, selon la revendication indépendante 7 annexée,

l'utilisation d'un projecteur pour aéronef tel que défini ci-dessus, pour la réalisation d'un projecteur d'atterrissage, de roulage ou de décollage.

D'autres buts, caractéristiques et avantages de l'invention apparaîtront à la lecture de la description suivante, donnée uniquement à titre d'exemple non limitatif, et faite en référence aux dessins annexés sur lesquels :
- les figures 1 et 2 sont des vues en perspective de deux modes de réalisation d'un projecteur à multiples fonctions d'éclairage conforme à l'invention ;
- la figure 3 est un schéma synoptique illustrant un exemple d'un module d'éclairage pour projecteur ne faisant pas partie de l'invention revendiquée, mais qui peut être utile pour en comprendre certains aspects ;
- la figure 4 illustre une variante de réalisation de la lentille du module d'éclairage de la figure 3 conforme à l'invention ;
- les figures 5a, 5b et 5c illustrent un exemple d'une lentille d'un module d'éclairage pour projecteur ne faisant pas partie de l'invention revendiquée, mais qui peut être utile pour en comprendre certains aspects ;
- les figures 6a, 6b, 6c et 6d illustrent un mode de réalisation d'un dispositif d'éclairage intégrant plusieurs modules d'éclairage ;
- les figures 7 à 12 illustrent l'intensité lumineuse produite par un projecteur à double ou triple fonction conforme à l'invention avec une même lentille ;
- la figure 13 illustre encore un autre exemple de réalisation d'un dispositif d'éclairage selon l'invention ; et

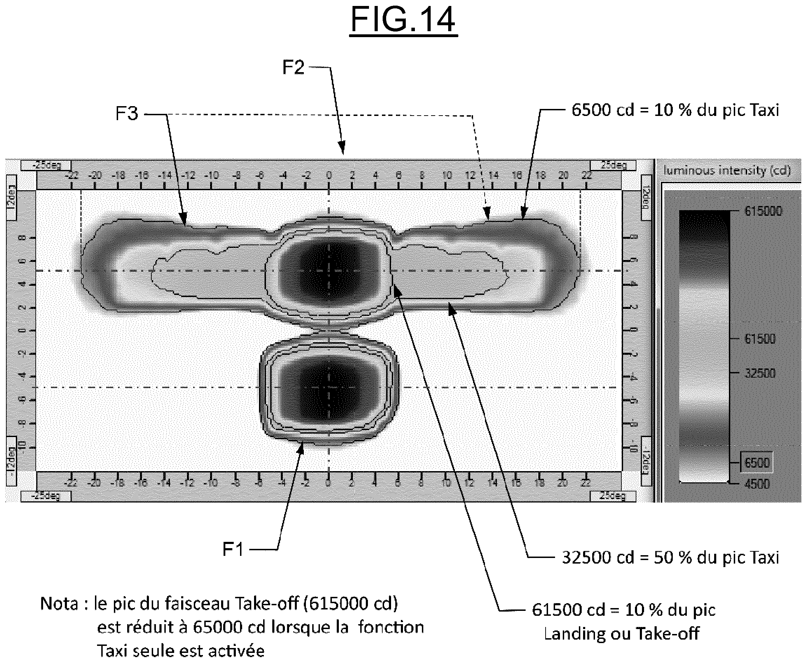

- la figure 14 montre l'intensité lumineuse produite par un projet équipé de dispositifs d'éclairage selon la figure 13.

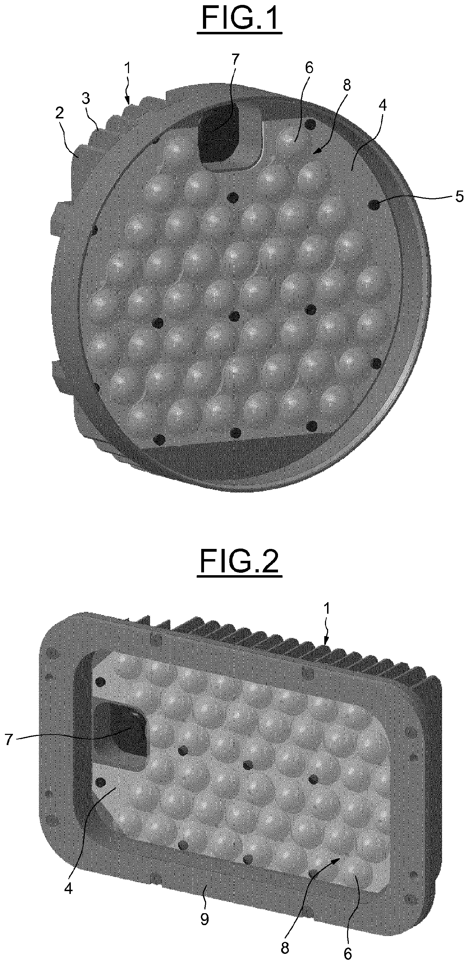

On se référera tout d'abord aux figures 1 et 2 qui illustrent la structure générale d'un projecteur à double fonction conforme à l'invention, désigné par la référence numérique générale 1.

Ce projecteur comporte un corps 2 métallique pourvu, en face arrière, d'ailettes de refroidissement 3, une plaque de circuit imprimé 4 montée en face avant, avantageusement vissée en plusieurs points sur le corps 2, à l'aide de vis, telles que 5, afin d'assurer une bonne dissipation thermique, et un réseau de dispositifs d'éclairage 6 montés sur la carte 4 de circuit imprimé. L'ensemble est coiffé par une glace transparente à la lumière (non représentée) et est alimenté au moyen d'un connecteur 7.

Dans les deux modes de réalisation illustrés sur les figures 1 et 2, la carte de circuit imprimé 4 comprend 16 dispositifs d'éclairage, référencés 8, comprenant chacun 3 modules d'éclairage soit au total 48 modules d'éclairage.

Dans le mode de réalisation de la figure 1, le projecteur a une forme circulaire et a une taille standard PAR 64, correspondant à un diamètre de 8 pouces ou 203 millimètres, la taille d'un projecteur étant généralement désignée par le nombre de PAR en 1/8 de pouce.

Dans le mode de réalisation de la figure 2, le projecteur a une forme rectangulaire, la glace étant fixée sur un épaulement avant 9.

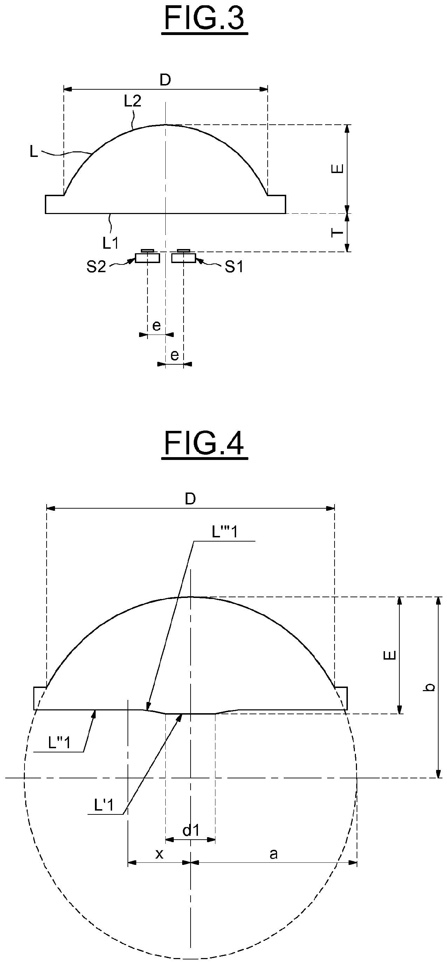

En se référant à la figure 3, chaque module d'éclairage 6 comprend une lentille L convergente comprenant un dioptre d'entrée de lumière L1 et un dioptre de sortie L2, et deux sources lumineuses S1 et S2 constituées par des diodes électroluminescentes ou DEL, placées en regard du dioptre d'entrée de lumière L1. Ces diodes correspondent chacune à une fonction du projecteur et sont destinées à être actionnables sélectivement avec des diodes identiques des autres modules d'éclairage, selon les phases de vol. Ainsi, l'une des diodes de chaque module délivre un faisceau d'atterrissage, l'autre délivrant un faisceau de décollage. Ces diodes sont désaxées par rapport à l'axe de la lentille de manière à obtenir un décalage angulaire des faisceaux délivrés.

Les deux sources S1 et S2 délimitent une surface émissive plane, placée à une distance T du dioptre d'entrée L1. Cette distance T correspond au tirage adopté pour former une image approximative des sources. Les deux sources S1 et S2 sont positionnées à une distance e qui représente le désaxage du centre des sources par rapport à l'axe de révolution de la lentille L.

Comme on le voit, la lentille L présente une épaisseur E et un diamètre utile D. Dans l'exemple illustré à la figure 3, le dioptre d'entrée est plan tandis que le dioptre de sortie L2 est elliptique.

Selon l'invention, comme illustré à la figure 4, le dioptre d'entrée reste généralement plan mais comporte une surface dioptrique centrale L'i en forme de disque de diamètre dl et une surface dioptrique externe L"₁, annulaire, coaxiale à la surface centrale L'1 ainsi qu'une surface médiane L‴₁ placée entre la surface centrale et la surface extérieure.

Comme on le voit, la surface dioptrique extérieure est en retrait par rapport à la surface centrale, en étant décalée vers la surface de sortie, la surface médiane L‴1 ayant une forme de tore tronconique.

Ce mode de réalisation, dans lequel la surface d'entrée de lumière L₁ présente deux surfaces, respectivement centrale et extérieure, et une surface médiane torique tronconique est avantageux dans la mesure où il permet de réduire la distorsion de l'image des sources formée par la lentille.

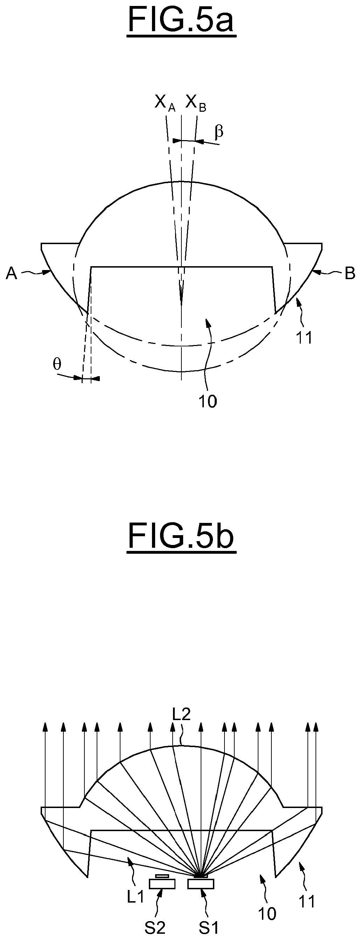

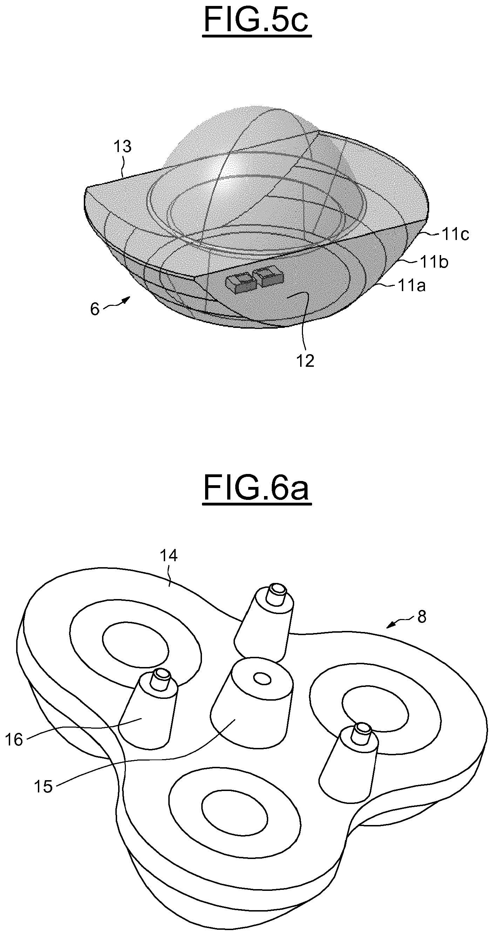

Dans l'exemple des figures 5a, 5b et 5c ne faisant pas partie de l'invention revendiquée, la lentille est catadioptrique. Elle comporte en l'occurrence une zone centrale 10 dioptrique qui assure la transmission de la lumière émise par les sources comme décrit précédemment, et une zone périphérique 11 formant un réflecteur assurant la réflexion de la lumière émise par les sources qui ne passe pas par la zone centrale dioptrique. Le réflecteur fonctionne sur le principe de la réflexion totale à l'intérieur de la matière.

Le réflecteur étant annulaire, il possède en son centre un évidement dans lequel viennent se loger les sources S1 et S2 (figure 5b).

La zone extérieure 11 réfléchissant la lumière a une forme parabolique ou conique et constitue un récupérateur de lumière positionné dans la zone périphérique de la lentille pour capter les rayons émis par les diodes qui n'entrent pas directement dans la lentille. Il permet ainsi d'augmenter le rendement lumineux de la lentille ainsi que le pic d'intensité.

Par exemple, comme illustré à la figure 5c, la zone extérieure parabolique peut être réalisée sous la forme d'une succession de portions tronconiques juxtaposées 11a, 11b et 11c approchant le profil parabolique. On pourra avantageusement prévoir des méplats latéraux 12 et 13 afin de réduire la taille globale de la lentille, une partie du récupérateur pouvant être supprimée sans réduire son efficacité. Dans ce cas, comme illustré, la lentille comprend deux surfaces réfléchissantes 11 opposées.

Comme le montre la figure 5a, l'évidement dans lequel sont localisées les sources lumineuses S1 et S2 a globalement une forme tronconique, la surface périphérique de l'évidement étant inclinée d'un angle θ par rapport à un axe parallèle à un axe de révolution de la lentille. Par ailleurs, il est avantageux de dissocier les surfaces réfléchissantes positionnées en regard de chacune des deux sources en inclinant l'axe des génératrices X_{A} et X_{B} des paraboles A et B des deux surfaces extérieures 11 par rapport à l'axe optique de la lentille d'un angle β afin de superposer l'image de la source produite par la voie dioptrique centrale et celle produite par la voie extérieure fonctionnant en réflexion totale.

Comme indiqué précédemment, le projecteur comporte, de préférence, un réseau de dispositifs d'éclairage comprenant chacun plusieurs modules d'éclairage comprenant chacun au moins deux sources lumineuses à diodes électroluminescentes actionnables sélectivement.

Dans les exemples de réalisation illustrés figures 6a à 6d, chaque dispositif d'éclairage comprend trois modules d'éclairage.

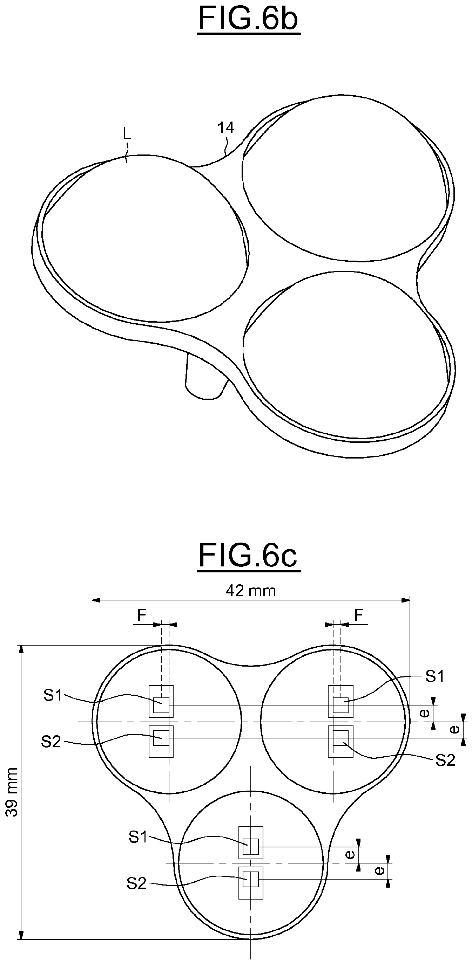

Chaque dispositif d'éclairage comprend ici, pour chaque module, deux sources lumineuses S1 et S2 constituées par des diodes électroluminescentes et comporte un dispositif optique 14 commun, illustré sur les figures 6a et 6b, comprenant ici trois lentilles L associées chacune à une paire de diodes S1 et S2.

Les diodes S1 et S2 de chaque groupe de modules peuvent être pilotées alternativement de sorte que les diodes S1, d'une part, ou S2, d'autre part qui assurent respectivement des fonctions d'éclairage différentes, peuvent être pilotées alternativement. Il est aussi possible de les piloter simultanément.

Ces diodes sont montées sur une carte de circuit imprimé commune. Comme décrit précédemment en référence à la figure 3, elles sont écartées d'une distance e par rapport à l'axe optique des lentilles de manière à obtenir un écartement angulaire entre les faisceaux utilisés pour l'atterrissage et les faisceaux utilisés pour le décollage.

Bien entendu, dans les divers modes de réalisation envisagés, on ne sort pas du cadre de l'invention lorsque l'on utilise une seule source lumineuse S comprenant deux zones émissives S' et S" pour assurer les deux fonctions d'éclairage.

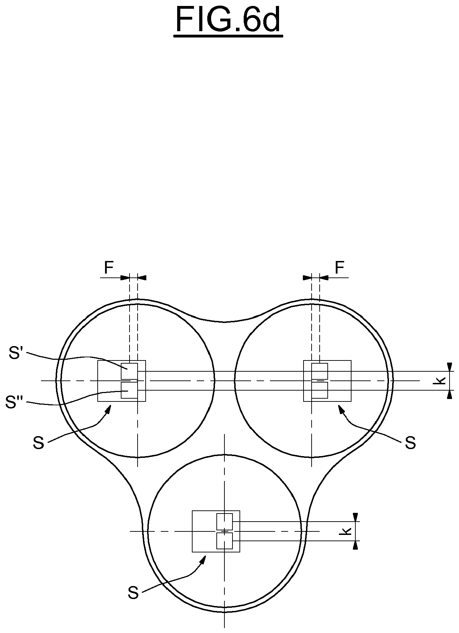

Ainsi, dans l'exemple de réalisation illustré à la figure 6d, qui correspond à un dispositif d'éclairage à trois modules d'éclairage, chaque module comprend une seule source lumineuse S constituée par une diode électroluminescente comprenant deux zones émissives S' et S" écartées d'une distance k et qui peuvent être alimentées indépendamment l'une de l'autre.

De préférence, chaque dispositif optique est doté d'un pied central 15 pour la fixation du dispositif sur la carte de circuit imprimé et plusieurs pieds de centrage, tels que 16, ici au nombre de trois, pour avantageusement positionner précisément les lentilles en regard des sources lumineuses.

On pourra avantageusement, dans divers modes de réalisation, réaliser les lentilles en matière plastique moulée de manière à réaliser les pieds, lors du moulage du dispositif optique.

Par exemple, les lentilles pourront être réalisées en tout type de matière plastique transparente. On pourra par exemple utiliser du polycarbonate ou le polyméthacrylate de méthyle (PMMA).

Afin d'améliorer le rendement optique des modules d'éclairage, on pourra avantageusement rapprocher les sources lumineuses par rapport à la face d'entrée de la lentille pour augmenter le flux capté. Il s'agit, en d'autres termes, de défocaliser les sources lumineuses en les décalant, par rapport à la focale des lentilles, du côté du dioptre d'entrée.

On notera que l'utilisation de sources lumineuses comprenant deux zones émissives, pour chaque diode, est avantageuse, dans la mesure où elle permet d'avoir des zones émissives très peu écartées l'une de l'autre, par exemple d'une distance de l'ordre de 0,1 millimètre, ce qui permet de produire des faisceaux ayant un faible écart angulaire.

Toutefois, l'utilisation de deux diodes pour la réalisation de chaque source lumineuse est également avantageuse dans la mesure où elle permet d'adapter l'écartement des diodes pour adapter finement l'angle entre les faisceaux selon les demandes des avionneurs et également de permettre d'adapter un même équipement à plusieurs aéronefs différents.

On notera également que l'on peut désaxer les sources lumineuses des modules afin de créer un faisceau légèrement ou fortement ovalisé.

On pourra, par exemple, désaxer sur la droite les sources pour une partie des modules d'éclairage du projecteur et désaxer sur la gauche les sources lumineuses d'une autre partie des modules d'éclairage du projecteur. Un tel désaxage permet de superposer les images des sources dans la zone centrale du projecteur sans faire baisser sensiblement le pic d'intensité et obtenir également un faisceau étalé de quelques degrés selon l'axe horizontal.

Dans les exemples de réalisation illustrés figures 6c et 6d, deux des 6 sources sont décalées vers la gauche d'une valeur F par rapport à l'axe de la lentille associée et deux autres sources des six sources sont décalées vers la droite d'une même valeur F par rapport à l'axe de la lentille associée.

Les DELs pourront donc être désaxées par rapport à l'axe des lentilles suivant deux directions perpendiculaires, l'une suivant la verticale afin de piloter ou définir l'écartement des 2 faisceaux atterrissage et décollage, l'autre suivant l'horizontale afin d'ovaliser ou d'étaler les faisceaux.

Il a été constaté qu'un module d'éclairage réalisé selon l'exemple de la figure 3 permet de couvrir une plage angulaire allant de 8 degrés à 12,2 degrés lorsque l'on utilise deux sources indépendantes désaxées par rapport à l'axe de révolution de la lentille d'une distance allant de 0,8 à 1,2 mm.

La lentille est également capable de produire deux faisceaux écartés de 5,5 degrés lorsque l'on utilise une diode électroluminescente ayant deux zones émissives juxtaposées distantes de 0,55 mm par rapport à l'axe de révolution de la lentille.

En modifiant les paramètres de la lentille, il est possible, avec des diodes électroluminescente ayant deux zones émissives juxtaposées distantes de 0,55 mm par rapport à l'axe de révolution de la lentille de produire des faisceaux écartés de 6,4° ou 7,2°. Il est donc possible de couvrir l'ensemble de la plage angulaire de 5,5° à 14° soit en modifiant l'écartement des sources pour une lentille donnée, soit en modifiant les paramètres de la lentille, ou encore en utilisant une diode électroluminescente ayant deux zones émissives juxtaposées.

Il a également été constaté que dans le mode de réalisation de la figure 4, on obtient également deux faisceaux couvrant une plage angulaire allant de 5,7 degrés à 12,2 degrés avec un rendement lumineux amélioré par rapport à l'exemple décrit figure 3.

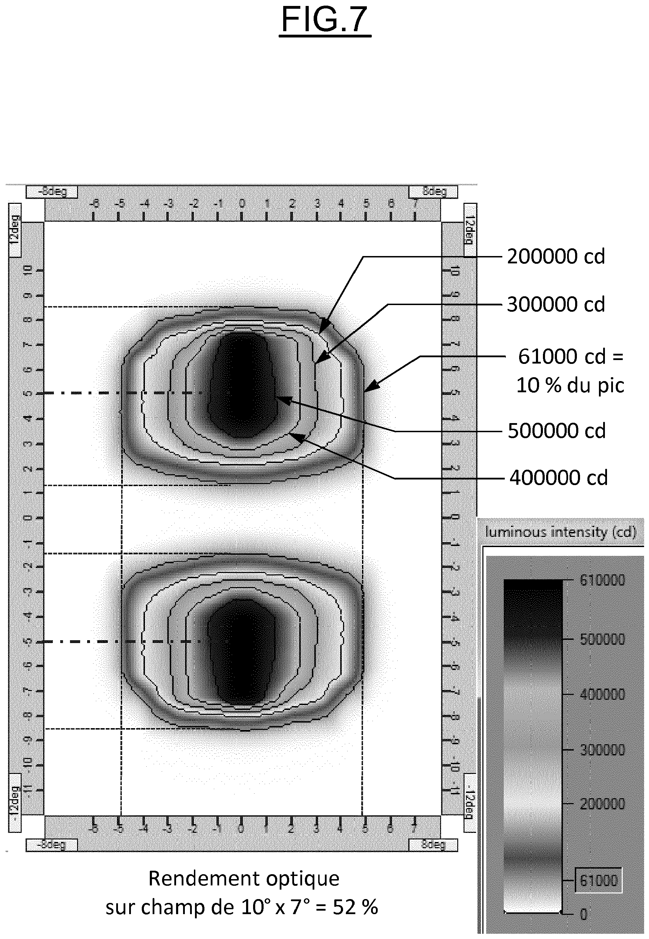

Les figures 7 à 10 représentent des courbes iso candelas correspondant aux performances des projecteurs des figures 1 et 2, lorsque ces projecteurs sont équipés de 96 diodes de trois watts ayant une surface émissive de 1 mm2 et délivrant un flux de 230 lumens et dont les 16 dispositifs optiques, ici triples, intègrent des lentilles correspondant au mode de réalisation de la figure 4.

La figure 7 illustre une carte d'intensités obtenues lorsque les deux faisceaux d'atterrissage et de décollage sont mis en œuvre, c'est-à-dire lorsque les 96 diodes sont allumées simultanément. L'écartement angulaire des deux faisceaux, de 10 degrés, est obtenu avec un écartement du centre des zones émissives de 2 mm.

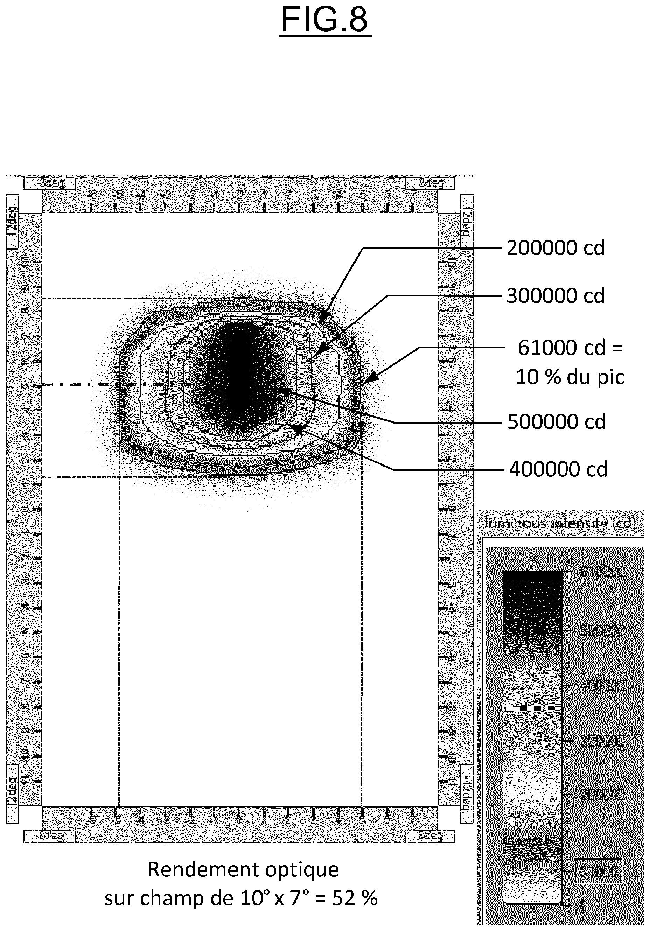

La figure 8 représente une carte d'intensités obtenues lorsque seul le faisceau de décollage est allumé, c'est-à-dire lorsque 48 diodes sont allumées.

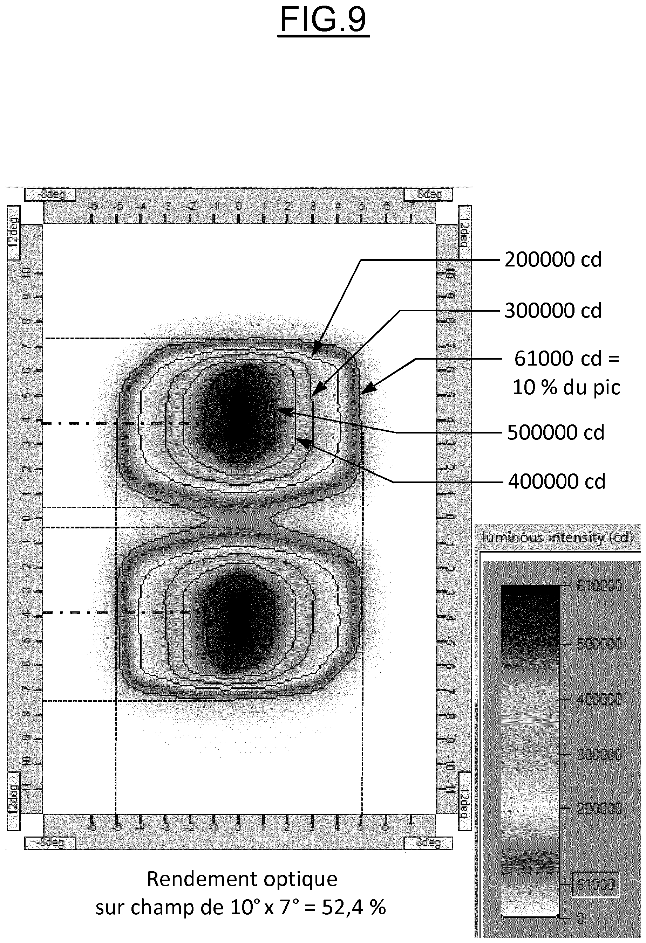

La figure 9 représente une carte d'intensités de deux faisceaux d'atterrissage et de décollage écartés de 7,8 degrés, correspondant à un écartement du centre des zones émissives de 1,6 mm.

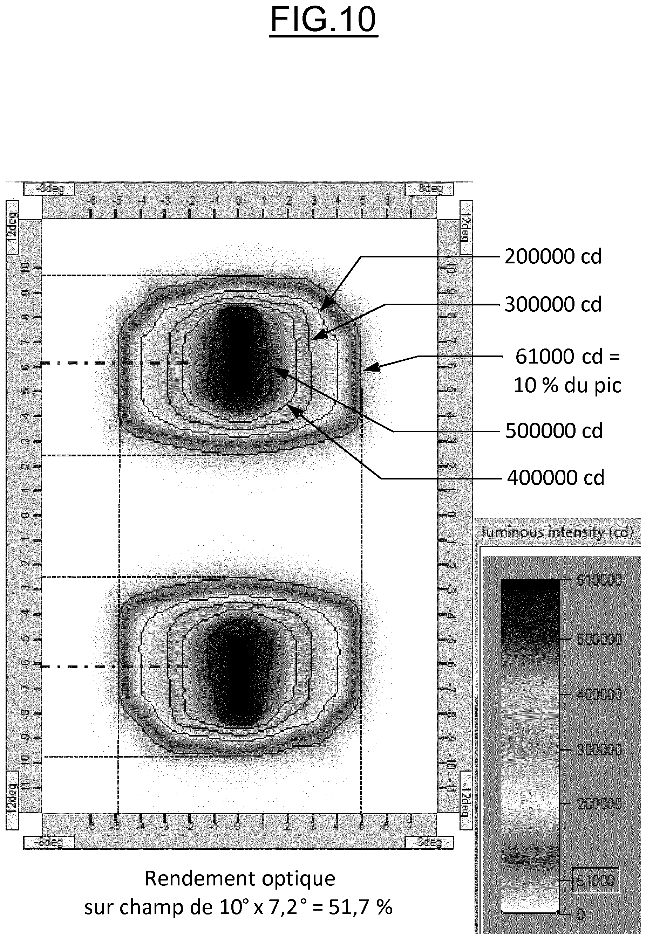

La figure 10 représente une carte d'intensités de deux faisceaux d'atterrissage et de décollage écartés de 12,2 degrés, correspondant à un écartement du centre des zones émissives de 2,4 mm.

Les performances illustrées sur les figures 7 à 10 correspondent à des diodes disposées comme décrit précédemment en référence à la figure 6c, en utilisant un tiers des diodes désaxées à gauche d'une valeur « F » de 0,375 mm par rapport à l'axe de révolution des lentilles et un autre tiers des diodes désaxées à droite d'une même valeur « F »égale à 0,375 mm, permettant d'obtenir des faisceaux ovalisés de 10 degrés x 7 degrés, considérés à 10% de la valeur du pic.

Le rendement optique du projecteur, incluant la consommation de la glace de sortie en polycarbonate, reste quasiment constant pour les trois écartements de faisceaux (7,8 degrés/10 degrés/12,2 degrés) tout comme le pic d'intensité et de champ.

Il a en effet été constaté que pour une lentille telle qu'illustrée à la figure 3, le rendement reste compris entre 58 et 59%.

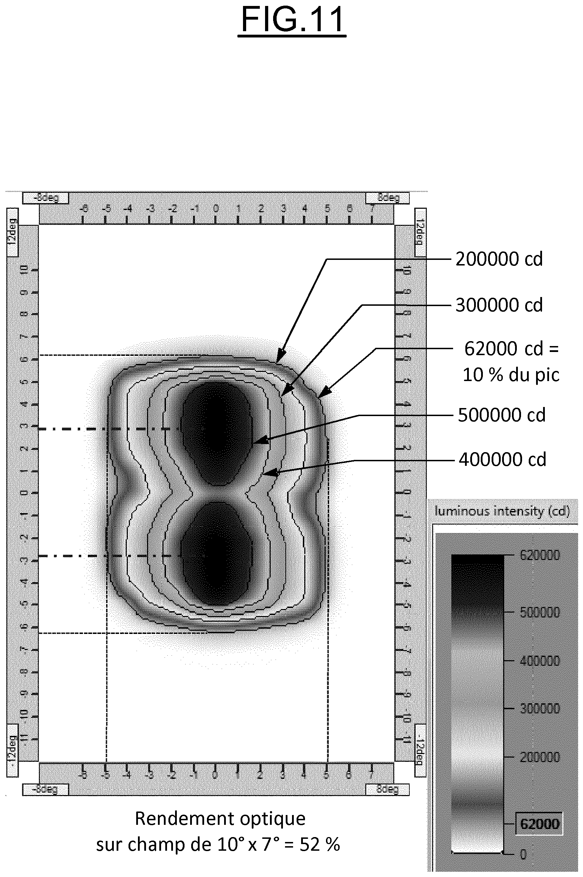

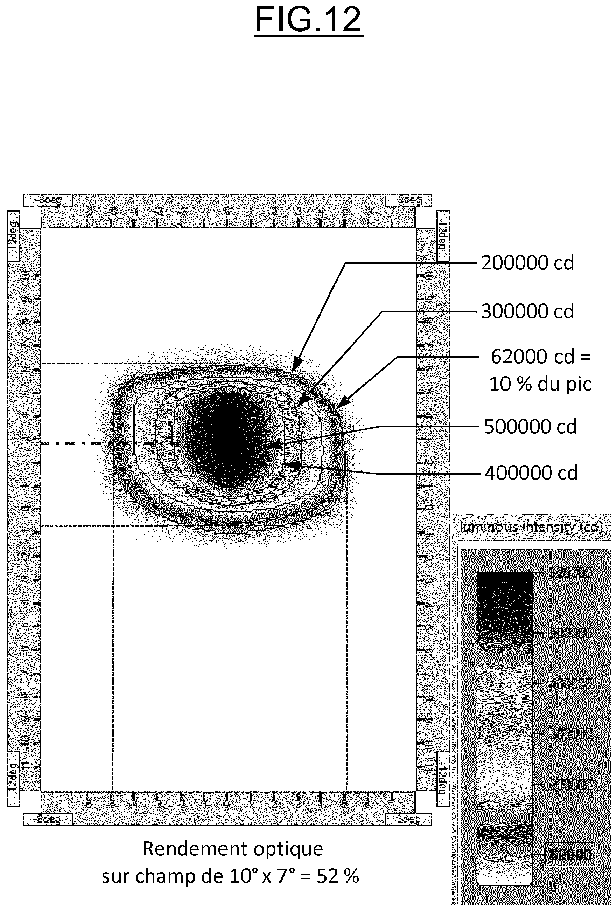

Les figures 11 et 12 illustrent des courbes iso candelas correspondant aux performances des projecteurs des figures 1 et 2 lorsque ces projecteurs sont équipés de 48 diodes comportant deux zones émissives juxtaposées de 1 mm2 chacune et délivrant un flux de 225 lumens lorsqu'elles sont alimentées à 1 ampère et dont les 16 dispositifs optiques triples intègrent des lentilles correspondant à celles décrites précédemment en référence à la figure 4.

La figure 11 représente une carte d'intensités de deux faisceaux d'atterrissage et de décollage écartés de 5,7 degrés, correspondant à un écartement du centre des zones émissives de 1,1 mm.

La figure 12 présente une carte d'intensités obtenues avec le seul faisceau de décollage allumé.

Les performances montrées sur ces figures 11 et 12 correspondent à des diodes disposées comme décrit précédemment en référence à la figure 6d. En d'autres termes, un tiers des diodes sont désaxées à gauche d'une valeur « F » égale à 0,375 mm par rapport à l'axe de révolution des lentilles et un autre tiers des diodes sont désaxées à droite d'une même valeur de « F », permettant d'obtenir des faisceaux ovalisés de 10 degrés x 7 degrés.

On notera enfin que l'invention n'est pas limitée aux modes de réalisation décrits précédemment.

En effet, dans les exemples de réalisation décrits en référence aux figures 6c et 6d, chaque module d'éclairage du dispositif d'éclairage comporte deux sources lumineuses S1 et S2 capables d'assurer deux ou trois fonctions.

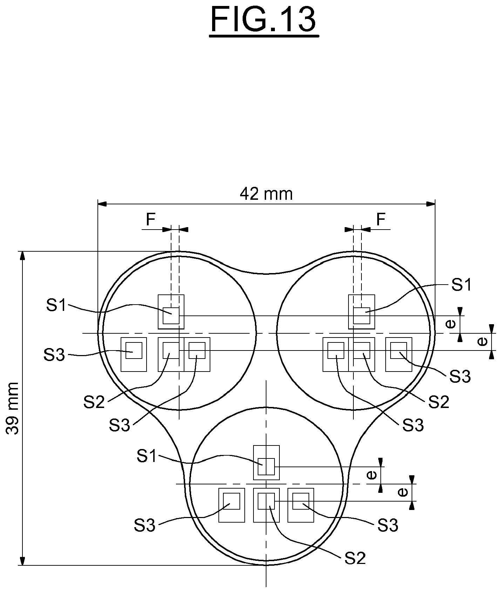

Il est également possible, en variante, comme illustré sur la figure 13, de doter chaque module d'éclairage de quatre sources, à savoir une première source S1, une deuxième source S2 et deux sources additionnelles S3.

Par exemple, la première source S1, d'une part et les autres sources S2 et S3, d'autre part, sont désaxées d'une distance « e » par rapport à un axe optique de la lentille.

Les sources sont également décalées, comme décrit précédemment en référence aux figures 6c et 6c, vers la gauche et vers la droite de manière à ovaliser ou étaler les faisceaux.

En allumant sélectivement les sources S1, S2 et S3, on obtient trois fonctions mises en œuvre sélectivement ou simultanément.

Les sources S1 forment le faisceau d'atterrissage F1, les sources S2 forment le faisceau de décollage F2 et, pour 12% d'entre elles, le faisceau de taxi et les sources S3 forment les côtés du faisceau taxi F3.

En effet, 12% des diodes S2 d'un projecteur restent allumées lorsque le faisceau de décollage est éteint et le faisceau taxi allumé car elles forment le centre du faisceau taxi.

On notera enfin que l'invention qui vient d'être décrite permet d'obtenir une faible dimension frontale des dispositifs d'éclairage et de créer ainsi des projecteurs de toute forme s'adaptant à l'encombrement disponible à l'intérieur des ailes des aéronefs et plus particulièrement d'optimiser la taille du hublot transparent intégré dans l'emplanture ou le bord d'attaque des ailes. En particulier, un projecteur multifonction réalisé conformément à l'enseignement de l'invention dispose sensiblement des mêmes dimensions frontales qu'un seul des projecteurs qu'il remplace.

## Revendications

1. Projecteur de piste à commutation de fonctions statique pour aéronef, destiné à produire au moins deux faisceaux ayant des caractéristiques différentes, notamment des orientations et/ou des ouvertures différentes, comprenant un réseau de modules d'éclairage (6) à diodes électroluminescentes comprenant chacun au moins deux ensembles d'au moins une source lumineuse (S) actionnable sélectivement et de manière statique pour assurer au moins l'une des fonctions d'éclairage, chaque module comportant une lentille convergente (L) commune pour les sources lumineuses, la lentille convergente (L) possède un dioptre d'entrée (L₁) à profil globalement plan et un dioptre de sortie ayant un profil elliptique ou asphérique, lesdites sources lumineuses étant positionnées par rapport au dioptre d'entrée de lumière, **caractérisé en ce que** le dioptre d'entrée comporte une surface dioptrique centrale (L'₁) en forme de disque, une surface dioptrique extérieure annulaire (L"₁) et une surface médiane (L‴₁) torique tronconique placée entre les surfaces centrale et extérieure.

2. Projecteur selon la revendication 1, dans lequel le plan focal de la lentille convergente est situé à une distance du dioptre d'entrée inférieure à 10mm.

3. Projecteur selon l'une des revendications 1 et 2, dans lequel les sources lumineuses sont désaxées par rapport par rapport à un axe de la lentille (L) de façon à générer soit des faisceaux d'orientation différente soit des faisceaux d'ouverture différente, soit des faisceaux d'orientation et d'ouverture différente, les sources lumineuses étant désaxées par rapport à l'axe de la lentille de manière que les faisceaux divergent mutuellement de 5 à 30°.

4. Projecteur selon l'une quelconque des revendications 1 à 3, dans lequel les sources lumineuses sont défocalisées par rapport à la lentille en étant rapprochées par rapport au dioptre d'entrée.

5. Projecteur selon l'une quelconque des revendications 1 à 4, dans lequel les sources lumineuses sont montées sur une carte de circuit imprimé (4) et dans lequel la lentille comporte des pieds (15, 16) de fixation et de positionnement de la lentille sur la carte.

6. Projecteur selon la revendication 5, comprenant un dispositif optique (14) comprenant un ensemble de lentilles convergentes regroupées associées chacune à au moins deux ensembles d'au moins une source lumineuse (S).

7. Utilisation d'un projecteur pour aéronef selon les revendications 1 à 6, pour la réalisation d'un projecteur d'atterrissage, de roulage ou de décollage.

## Patentansprüche

1. Landelicht mit statischer Funktionsumschaltung für ein Flugzeug, das bestimmt ist, mindestens zwei Strahlen mit unterschiedlichen Merkmalen, insbesondere mit unterschiedlichen Ausrichtungen und/oder Öffnungen, zu erzeugen, umfassend ein Netz aus Beleuchtungsmodulen (6) mit LEDs, die jeweils mindestens zwei Einheiten von mindestens einer Lichtquelle (S) umfassen, die selektiv und statisch bedienbar ist, um mindestens eine der Beleuchtungsfunktionen sicherzustellen, wobei jedes Modul eine für die Lichtquellen gemeinsame konvergente Linse (L) aufweist, wobei die konvergente Linse (L) einen Eingangsdiopter (L₁) mit allgemein ebenem Profil und einen Ausgangsdiopter mit einem elliptischen oder asphärischen Profil besitzt, wobei die Lichtquellen im Verhältnis zum Eingangsdiopter des Lichts positioniert sind, **dadurch gekennzeichnet, dass** der Eingangsdiopter eine zentrale dioptrische Oberfläche (L'₁) in Scheibenform, eine ringförmige äußere dioptrische Oberfläche (L"₁) und eine kegelstumpfförmige torische mittlere Oberfläche (L‴₁) aufweist, die zwischen der zentralen und äußeren Oberfläche platziert ist.

2. Projektor nach Anspruch 1, wobei sich die Fokalebene der konvergenten Linse in einem Abstand vom Eingangsdiopter von unter 10 mm befindet.

3. Projektor nach einem der Ansprüche 1 und 2, wobei die Lichtquellen im Verhältnis zu einer Achse der Linse (L) derart achsverschoben sind, dass entweder Strahlen mit unterschiedlicher Ausrichtung oder Strahlen mit unterschiedlicher Öffnung oder Strahlen mit unterschiedlicher Ausrichtung und Öffnung erzeugt werden, wobei die Lichtquellen im Verhältnis zur Achse der Linse derart achsverschoben sind, dass die Strahlen gegenseitig von 5 bis 30° divergieren.

4. Projektor nach einem der Ansprüche 1 bis 3, wobei die Lichtquellen im Verhältnis zur Linse defokussiert sind, indem sie im Verhältnis zum Eingangsdiopter angenähert sind.

5. Projektor nach einem der Ansprüche 1 bis 4, wobei die Lichtquellen auf einer gedruckten Leiterkarte (4) angebracht sind und wobei die Linse Befestigungs- und Positionierungsfüße (15, 16) der Linse auf der Karte aufweist.

6. Projektor nach Anspruch 5, umfassend eine optische Vorrichtung (14), die eine Einheit konvergenter Linsen umfasst, die jeweils mindestens zwei Einheiten mindestens einer Lichtquelle (S) zugeordnet sind.

7. Verwendung eines Projektors für ein Flugzeug nach den Ansprüchen 1 bis 6 für die Herstellung eines Lande-, Roll- oder Startprojektors.

## Claims

1. Aircraft runway light with static function switching, for producing at least two beams having different characteristics, in particular different orientations and/or apertures, comprising an array of light-emitting diode lighting modules (6) each comprising at least two sets of at least one selectively and statically activatable light source (S) in order to provide at least one of the lighting functions, each module including a converging lens (L) that is common to the light sources, the converging lens (L) having an incoming light refracting face (L₁) with a generally planar profile, and an outgoing light refracting face with an elliptical or aspheric profile, said light sources being positioned relative to the incoming light refracting face, **characterised in that** the incoming light refracting face includes a disc-shaped central refracting surface (L′₁), an annular outer refracting surface (Lʺ₁) and a frustoconical toric median surface (L‴₁) placed between the central and outer surfaces.

2. Light according to claim 1, wherein the focal plane of the converging lens is located at a distance from the incoming light refracting face of less than 10 mm.

3. Light according to one of claims 1 and 2, wherein the light sources are offset from an axis of the lens (L) so as to generate either beams of different orientations or beams of different apertures, or beams of different orientations and apertures, the light sources being offset from the axis of the lens such that the beams diverge from one another by 5 to 30°.

4. Light according to any one of claims 1 to 3, wherein the light sources are defocused relative to the lens by being brought closer to the incoming light refracting face.

5. Light according to any one of claims 1 to 4, wherein the light sources are mounted on a printed circuit board (4) and wherein the lens includes feet (15, 16) for fastening and positioning the lens on the board.

6. Light according to claim 5, comprising an optical device (14) comprising a set of grouped converging lenses, each associated with at least two sets of at least one light source (S).

7. Use of an aircraft light according to claims 1 to 6, to make a landing, taxiing or take-off light.
